# EUROPÄISCHE PATENTSCHRIFT

(11) **EP 2 884 150 B1**
(45) Veröffentlichungstag und Bekanntmachung des Hinweises auf die Patenterteilung: **27.02.2019**
(21) Anmeldenummer: 14196454.4
(22) Anmeldetag: 05.12.2014
(51) Int. Cl.: F01M 11/04, F16N 13/16, F16N 19/00, F16N 21/00, F16N 31/02

(54) **Schmiermittelpumpe**
Lubrication pump
Pompe à lubrifiant

(30) Priorität: 16.12.2013 DE 102013226130
(43) Veröffentlichungstag der Anmeldung: 17.06.2015
(73) Patentinhaber: SKF Lubrication Systems Germany GmbH, 69190 Walldorf (DE)
(72) Erfinder: Schmidt, Fabian, 14979 Großbeeren (DE); Kreutzkämper, Jürgen, 74915 Waibstadt-Daisbach (DE); Schmidt, Holger, 14532 Klein-Manchow (DE); Schönherr, Dieter, 14979 Kleinbeeren (DE)
(74) Vertreter: Kuhstrebe, Jochen

(56) Entgegenhaltungen:
- GB-A- 191 305 929
- US-A- 1 896 507
- US-A- 1 917 238
- US-A- 2 128 636
- US-A- 5 983 960
- US-A1- 2010 230 432

## Beschreibung

Vorliegende Erfindung betrifft eine Schmiermittelpumpe mit einem Gehäuse, das einen Vorratsbehälter für Schmiermittel und einen eine Pumpeneinheit, insbesondere eine Kolbenpumpeneinheit, umfassenden Pumpengehäuseabschnitt aufweist, wobei der Vorratsbehälter eine Schmiermitteleinfüllstelle und eine mit der Pumpeneinheit verbundene Schmiermittelauslassstelle aufweist, wobei die Schmiermitteleinfüllstelle an einer Oberseite des Vorratsbehälters angeordnet ist und mit einem Deckel abgedeckt ist.

Aus dem Stand der Technik bekannte Schmiermittelpumpen sind üblicherweise derart aufgebaut, dass in einem Gehäuse ein Vorratsbehälter ausgebildet ist zur Aufnahme von Schmiermittel und einer am Vorratsbehälter angeordneten Kolbenpumpe, die Schmiermittel aus einem unteren Bereich des Vorratsbehälters saugt und zu einem Verbraucher fördert. Dabei ist üblicherweise an einer Oberseite des Vorratsbehälters ein Einfüllstutzen vorgesehen, über den Schmiermittel in den Vorratsbehälter eingebracht werden kann. Dieser Einfüllstutzen ist üblicherweise mittels eines auf der Oberseite des Vorratsbehälters angeordneten Deckels verschlossen, der üblicherweise über ein Scharnier oder eine andere Befestigungsvorrichtung drehbar befestigt ist. Derartige Schmiermittelpumpen sind beispielsweise aus den Druckschriften US 2,128,636 oder US 1,896,507 bekannt.

Weiterhin ist im Bodenbereich des Vorratsbehälters ein Füllstandsensor angeordnet, der eine Füllstandmenge in dem Vorratsbehälter misst. Dabei muss dieser Füllstandsensor möglichst vertikal angeordnet sein, damit er korrekte Werte liefern kann. Dazu ist üblicherweise eine aufwendige Justierung und Verschraubung nötig.

Nachteilig an der bekannten Schmiermittelpumpe ist deshalb zum einen, dass der Platzbedarf im oberen Bereich zum Einfüllen von Schmiermittel aufgrund des oben befestigten Deckels sehr groß ist. Ist der Deckel dagegen nicht mit Scharnieren befestigt, sondern lediglich als Schraubelement vorgesehen, so besteht die Gefahr, dass der Deckel leicht verlorengeht. Zudem passiert es häufig, dass Schmiermittel nicht vollständig in dem Einfüllstutzen aufgenommen wird und dann einen Bereich rund um die Schmiermittelpumpe verschmutzt. Weiterhin ist nachteilig, dass der Füllstandssensor aufwendig justiert und befestiget werden muss, was unverhältnismäßig zeit- und montageintensiv ist Aufgabe vorliegender Erfindung ist es deshalb eine Schmiermittelpumpe bereitzustellen, bei der der Bauraumbedarf im oberen Bereich verringert ist. Es ist weiterhin Aufgabe vorliegender Erfindung, die Befestigungssituation für den Füllstandsensor zu verbessern.

Diese Aufgabe wird durch eine Schmiermittelpumpe gemäß Patentanspruch 1 gelöst.

Erfindungsgemäß weist die Schmiermittelpumpe ein Gehäuse auf, das einen Vorratsbehälter für Schmiermittel und einen eine Pumpeneinheit, insbesondere eine Kolbenpumpeneinheit, umfassenden Pumpengehäuseabschnitt aufweist. Dabei ist an dem Vorratsbehälter eine Schmiermitteleinfüllstelle und eine mit der Pumpeneinheit verbundene Schmiermittelauslassstelle vorgesehen, wobei die Schmiermitteleinfüllstelle an einer Oberseite des Vorratsbehälters angeordnet ist und mit einem Deckel abgedeckt ist. Um vorteilhafterweise möglichst wenig Bauraum oberhalb der Schmiermittelpumpe zu beanspruchen, basiert die Erfindung auf der Idee, den Deckel zum Abdecken der Schmiermitteleinfüllstelle an einer Vorderseite des Vorratsbehälters drehbar gelagert anzuordnen. Da der Deckel nicht wie üblich an der Oberseite des Vorratsbehälters drehbar gelagert ist, sondern an einer Vorderseite des Vorratsbehälters, kann der Bauraumbedarf im oberen Bereich verringert werden. Vorzugsweise weist dabei der Deckel ein Frontelement und ein daran abgewinkelt angeordnetes Abdeckelement auf, wobei das Abdeckelement dazu ausgebildet ist, die Schmiermitteleinlassstelle abzudecken. Dabei klappt vorteilhafterweise der Deckel nicht nach oben, sondern nach unten, so dass kein Bauraum im oberen Bereich benötigt wird.

Vorzugsweise ist dafür der Deckel mittels eines Scharniers drehbar befestigt, wobei das Scharnier vorzugsweise einen Verdrehwinkel von mehr als 90°, insbesondere ungefähr 180° ermöglicht. Dadurch kann der Deckel komplett nach unten verschwenken, so dass das Frontelement des Deckels an der Vorderseite des Vorratsbehälters zu liegen kommt, während das daran abgewinkelt angeordnete Abdeckelement von der Schmiermittelpumpe nach vorne wegsteht. Dadurch kann das Abdeckelement zudem als Tropfauffangschale für das einzufüllende Schmiermittel dienen. Zudem kann das abgewinkelt angeordnete Abdeckelement weitere Elemente aufweisen, die als Tropfauffangschale ausgebildet sind. Dazu gehören beispielsweise Randelemente, die ein Herabfließen von Schmiermittel aus dem abgewinkelt angeordneten Element verhindern.

Gemäß einem weiteren vorteilhaften Ausführungsbeispiel ist der Pumpengehäuseabschnitt unterhalb des Vorratsbehälters angeordnet, wobei vorzugsweise die Pumpeneinheit als Kolbenpumpe ausgebildet ist, deren Kolbenpumpenbewegung im Wesentlichen horizontal erfolgt. Aus dem Stand der Technik sind Kolbenpumpen bekannt, die vorzugsweise vertikal unter dem Vorratsbehälter angeordnet sind. Dadurch wird wiederum der axiale und vertikal benötigte Bauraum vergrößert, was durch die erfindungsgemäße Anordnung einer liegenden Pumpeneinheit verhindert wird.

Dabei kann die Pumpeneinheit weiterhin eine Ventilanordnung aufweisen, die vorzugsweise seitlich neben der Pumpe angeordnet werden kann, so dass auch hier der vertikale Bauraumbedarf verringert wird.

Ein weiterer Aspekt vorliegender Erfindung betrifft eine Schmiermittelpumpe mit einem Gehäuse, das einen Vorratsbehälter für ein Schmiermittel und einen eine Pumpeneinheit, insbesondere eine Kolbenpumpeneinheit umfassenden Pumpengehäuseabschnitt aufweist. Dabei ist weiterhin ein Schmiermittelfüllstandsensor vorgesehen, der vorzugsweise an der Pumpeneinheit mittels eines Halteelements befestigt ist und von dort aus in den Vorratsbehälter hineinragt. Üblicherweise musste der Schmiermittelfüllstandsensor über mehrere Schrauben und Befestigungselemente senkrecht in dem Vorratsbehälter ausgerichtet werden, was sehr zeitaufwendig und montageunfreundlich war. Aufgrund des erfindungsgemäßen Halteelements kann der Schmiermittelfüllstandsensor einfach an der Pumpeneinheit bzw. der Ventileinheit befestigt und senkrecht ausgerichtet werden.

Dazu weist vorzugsweise das Halteelement eine erste im Wesentlichen vertikal ausgerichtete Anlagefläche und eine zweite im Wesentlichen vertikal ausgerichtete Anlagefläche für den Schmiermittelfüllstandsensor auf, wobei die erste und die zweite Anlagefläche horizontal im Wesentlichen im rechten Winkel zueinander angeordnet sind. Ist der Schmiermittelfüllstandsensor an den Anlageflächen des Halteelements ausgerichtet, so kann sichergestellt sein, dass der Füllstandsensor im Wesentlichen senkrecht ist. Eine umständliche Ausrichtung des Füllstandsensors mittels Wasserwage und verschiedenen zu justierenden Befestigungselementen ist dadurch nicht mehr nötig.

Vorzugsweise kann das Halteelement weiterhin dazu ausgelegt sein, die Pumpeneinheit und/oder eine an der Pumpenanordnung angeordnete Ventilanordnung in der Pumpengehäuseeinheit zu befestigen. Dadurch können die Anzahl der einzubauenden Elemente verringert werden, so dass die Montage einfacher von statten geht.

Gemäß einem weiteren vorteilhaften Ausführungsbeispiel weist die Halterung mindestens eine Öffnung zum Aufnehmen eines Befestigungsmittels auf, wobei das Befestigungsmittel vorzugsweise dazu ausgelegt ist, die Halterung und gleichzeitig die Pumpeneinheit und/oder Ventileinheit in der Pumpengehäuseeinheit zu befestigen. Dabei kann die Öffnung vorzugsweise mit einem Innengewinde zur Aufnahme eines als Schraube ausgebildeten Befestigungsmittels ausgestattet sein. Gleichzeitig hat das Befestigungsmittel den Vorteil, dass weitere an der Ventilanordnung vorgesehene Elemente, wie beispielsweise Abdeckelemente, mittels des Befestigungsmittels gesichert werden können. Da lediglich eine Schraube bzw. ein Befestigungsmittel zum Befestigen der Pumpeneinheit, der Halterung und des Füllstandsensors nötig ist, können die zu verbauenden Elemente anzahlmäßig reduziert werden, was wiederum die Montage vereinfacht.

Zudem ermöglicht das erfindungsgemäße Halteelement, dass auf ein Extragehäuse für den Füllstandssensor verzichtet werden kann. Dieser kann aufgrund des von einem Bodenbereich des Pumpengehäuses zugänglichen Befestigungsmittel und des erfindungsgemäßen Halteelements direkt in einem integral mit dem Vorratsbehälter ausgebildetes Füllstandssensorgehäuse aufgenommen, ausgerichtet und befestigt werden.

Des Weiteren ist bevorzugt, das erfindungsgemäße Halteelement als Winkelelement, insbesondere als Blechwinkelelement, auszubilden mit einem ersten und einem im Wesentlichen im rechten Winkel dazu ausgerichteten zweiten Schenkel. Dabei kann insbesondere der erste Schenkel dazu ausgelegt sein, an einer Seitenwand des Pumpengehäusebodenabschnitt anzuliegen, während der zweite Schenkel vorzugsweise dazu ausgebildet ist, die erste und zweite Anlagefläche für den Füllstandssensor aufzuweisen.

Weitere Vorteile und vorteilhafte Ausführungsformen sind in der Beschreibung, den Zeichnungen und den Ansprüchen definiert.

Es zeigen:
- Fig. 1:: eine schematische Explosionsdarstellung einer erfindungsgemäßen Schmiermittelpumpe;
- Fig. 2:: eine schematische Schnittansicht durch die in Fig. 1 dargestellte Kolbenpumpenvorrichtung entlang der Schnittlinie A-A;
- Fig. 3:: eine Schnittansicht durch die in Fig. 1 dargestellte Kolbenpumpenvorrichtung entlang einer Schnittlinie B-B;
- Fig. 4:: eine Schnittansicht durch die in Fig. 1 dargestellten Kolbenpumpenvorrichtung mit Gehäuse entlang einer Schnittlinie C-C;
- Fig. 5:: eine schematisch Aufsicht auf einen Pumpengehäusebodenabschnitt;
- Fig. 6:: eine schematische Seitenansicht der erfindungsgemäßen Schmiermittelpumpe im Zusammenbau; und
- Fig. 7:: schematische Detaildarstellungen eines erfindungsgemäßen Halteelements.

Im Folgenden werden gleiche oder funktionell gleichwirkende Elemente mit den gleichen Bezugszeichen gekennzeichnet.

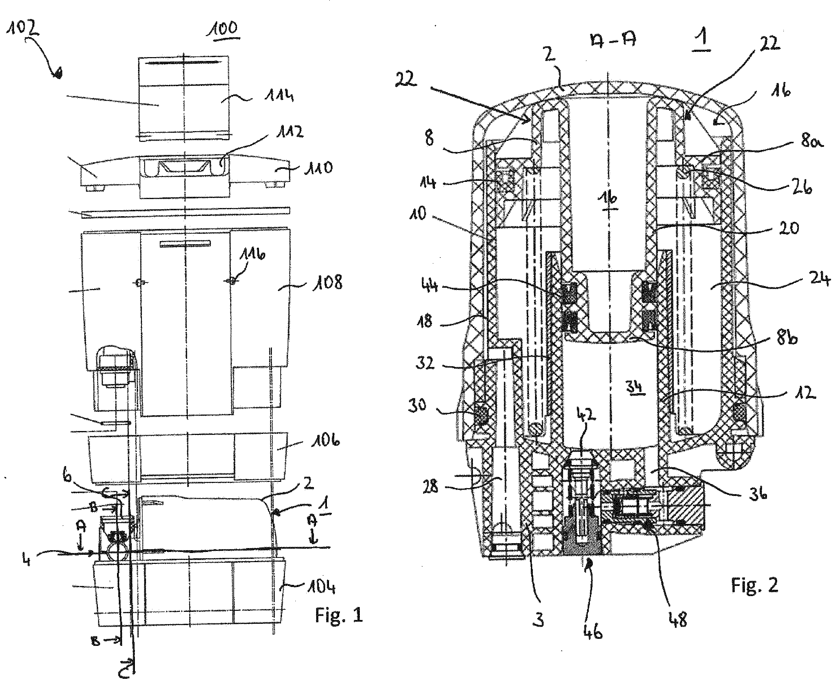

Fig. 1 zeigt eine schematische Explosionsdarstellung einer erfindungsgemäßen Schmiermittelpumpe 100 mit einem Gehäuse 102, das aus mehreren Teilen, unter anderem einem Pumpengehäusebodenabschnitt 104, einem Pumpengehäusedeckelabschnitt 106, einem Vorratsbehälter 108 und einem Vorratsbehälterdeckel 110 aufgebaut ist. Wie weiterhin Fig. 1 zu entnehmen, ist in dem Pumpengehäusebodenabschnitt 104 eine Kolbenpumpenvorrichtung 1 angeordnet auf die im Folgenden genauer eingegangen wird. Fig. 1 ist dabei zu entnehmen, dass die Kolbenpumpenvorrichtung 1 selbst in einem Außengehäuse 2 aufgenommen ist, und neben der Kolbenpumpenvorrichtung 1 eine Ventilanordnung 4 angeordnet ist. Um das Fördermedium, insbesondere das Schmiermittel, aus dem Vorratsbehälter 108 in die Kolbenpumpenvorrichtung 1 zu bringen, ist weiterhin ein Fördermediumeinlassstutzen 6 vorgesehen, der mit dem Vorratsbehälter 108 verbindbar ist und über den, wie weiter unten genauer beschrieben wird, Fördermedium in einen Förderraum der Kolbenpumpenvorrichtung 1 gesaugt wird.

Der Vorratsbehälter 108 dient zur Aufnahme eines Fördermediums, insbesondere von Schmiermittel, und wird über eine an der Oberseite des Vorratsbehälterdeckels 110 ausgebildete Einfüllöffnung 112 mit Fördermedium/Schmiermittel befüllt. Dabei ist die Einfüllöffnung 112 mittels eines Deckelelements 114 abgedeckt, wobei das Deckelelement 114 an Scharnieren 116 an einer Vorderseite des Vorratsbehälters 108 angeordnet ist. Diese erfindungsgemäße Befestigung des Deckelelements 114 an der Vorderseite des Vorratsbehälters 108 ermöglicht aufgrund der daraus resultierenden Öffnungskinematik, dass der oberhalb des Vorratsbehälters 108 benötigte Bauraum verringert wird.

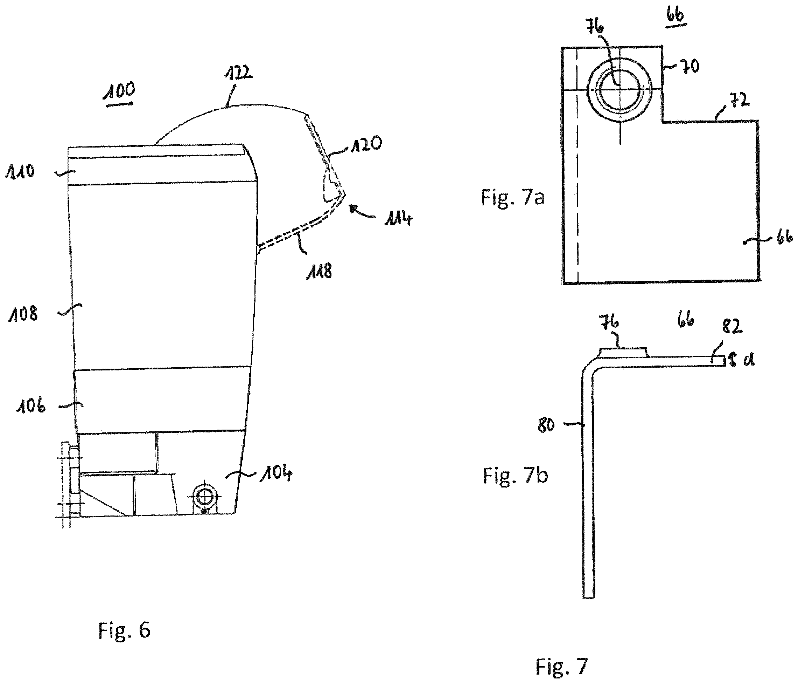

Dies wird insbesondere auch über die in Fig. 6 dargestellte Seitenansicht der Schmiermittelpumpe 100 im Zusammenbau deutlich. Wie der Darstellung zu entnehmen, weist das Deckelelement 114 ein Frontelement 118 und ein abgewinkelt dazu angeordnetes Abdeckelement 120 auf. In der geschlossenen Position liegt dabei das Frontelement 118 an der Vorderseite des Vorratsbehälters 108 an, während das Abdeckelement 120 die Schmiermitteleinfüllöffnung abdeckt.

Ist das Deckelelement 114 dagegen geöffnet, so liegt das Frontelement 118 zwar weiter an der Vorderseite des Vorratsbehälters 108 an, das Abdeckelement 120 dagegen steht, vorzugsweise im Wesentlichen waagrecht, von der Vorderseite des Vorratsbehälters an und bildet dadurch erfindungsgemäß einen Tropfauffangelement. Dadurch kann versehentlich verschüttetes Schmiermittel aufgefangen werden.

Gleichzeitig ist aufgrund des Öffnungskinematik des Deckelelements 114 über die Vorderseite der Schmiermittelpumpe 100 der Bauraumbedarf des Verschwenkbereichs 122 nach oben verringert.

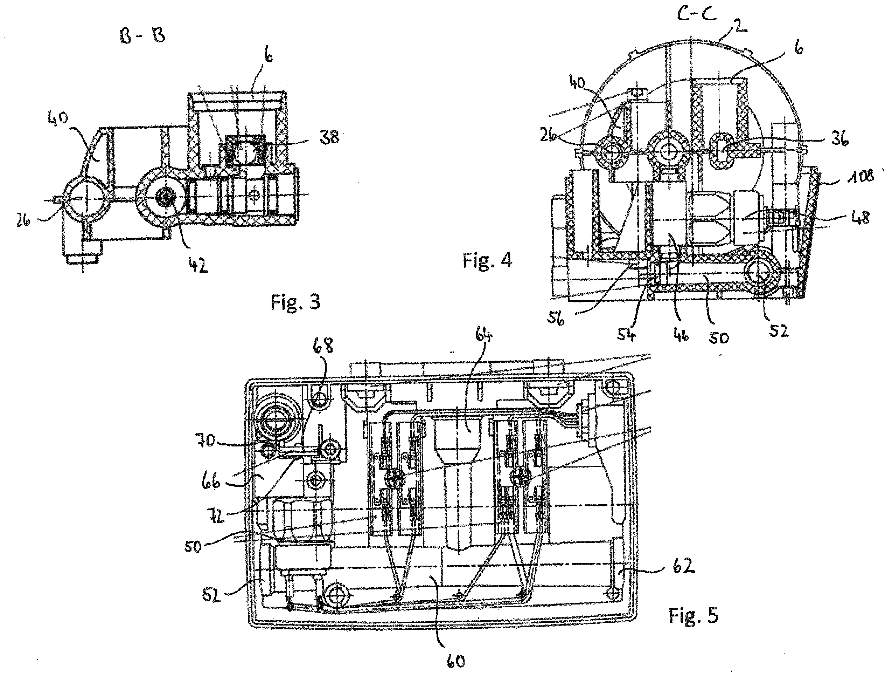

Im Folgenden wird insbesondere auf die Kolbenpumpenvorrichtung 1 eingegangen, wobei die Figuren 2 und 3, nur die Kolbenpumpenvorrichtung, die Figuren 4 und 5, die Kolbenpumpenvorrichtung 1 im Pumpengehäusebodenabschnitt 104 zeigen.

Dabei stellt Fig. 2 die Schnittansicht entlang der Linie A-A dar, während Fig. 3 eine Schnittansicht entlang der Linie B-B ohne Pumpengehäusebodenabschnitt 104 zeigt.

Wie der Schnittansicht aus Fig. 2 entnommen werden kann, weist die Kolbenpumpenvorrichtung 1 ein in dem Außengehäuse 2 aufgenommenes Innengehäuse 3 auf, das mittels Dichtungen 30 gegen das Außengehäuse 2 abgedichtet ist. In dem Innengehäuse 30 ist wiederum ein Kolben 8 angeordnet, der als Doppelkolben mit einem Arbeitskolben 8a und einem Förderkolben 8b ausgebildet ist. Dabei liegt der Arbeitskolben 8a dichtend an einem ersten Gehäuseteil 10 des Innengehäuses 3 an, während der Förderkolben 8b in einem zweiten Gehäuseteil 12 des Innengehäuses 3 aufgenommen ist. Dazu weist der Arbeitskolben 8a an seinem radial äußeren Rand Dichtungselemente 14 auf, die den Arbeitskolben 8a an dem ersten Gehäuseteil 10 dichtend anliegen lassen, so dass zwischen dem Arbeitskolben 8a, dem ersten Gehäuseteil 10 und dem Außengehäuse 2 ein Arbeitsraum 16 für ein Arbeitsmedium bereitgestellt ist. Dabei zeigt Fig. 2, dass der Arbeitsraum 16 sich nicht nur rechts und links von dem Kolben 8 erstreckt, sondern aufgrund der erfindungsgemäßen im Wesentlichen topfförmigen Ausformung des Doppelkolbens 8 mit einer hohlen Kolbenstange 20 sich auch in den Hohlraum der Kolbenstange 20 erstreckt. Dadurch kann der Druck des Arbeitsmediums auch direkt auf den Förderkolben 8b übertragen werden, so dass die Druckverteilung am Doppelkolben verbessert ist.

Zudem weist der Doppelkolben 8 erfindungsgemäß im Bereich des Arbeitskolbens, eine Umstülpung 22 auf, die für eine erhöhte Stabilität des Doppelkolbens 8 sorgt und eine Angriffsfläche für das Arbeitsmedium am Arbeitskolben vergrößert, wodurch die Druckbelastung auf den Arbeitskolben verringert werden kann. Weiterhin ist der Doppelkolben 8, wie oben bereits erwähnt, im Wesentlichen topfförmig ausgebildet, mit einer als Topfwand ausgebildeten Kolbenstange 20, einem als Topfboden ausgebildeten Förderkolben 8b und einem als Topfrand ausgebildeten Arbeitskolben 8a. Dabei ist der Topfrand des Förderkolbens 8a vorzugsweise mit der oben beschriebenen Umstülpung 22 ausgebildet. Da weiterhin auch im Topfinneren, also in der hohlen Kolbenstange 20, wie bereits oben beschrieben, der Arbeitsdruck des Arbeitsmediums herrscht, kann der Druck des Arbeitsmediums direkt auf den Förderkolben 8b wirken. Des Weiteren ermöglicht die erfindungsgemäße Umstülpung 22, dass die Kolbenpumpenvorrichtung 1 eine besonders kompakte Ausbildung aufweist, da in der Umstülpung 22 das zweite Gehäuseteil 12 zumindest teilweise aufnehmbar ist.

Aufgrund der erfindungsgemäßen Ausgestaltung des Doppelkolbens 8 mit Umstülpung 22 bzw. der Topfform mit der daraus resultierenden hohlen Kolbenstange 20 kann auf einen massiven und schweren Stahldoppelkolben verzichtet werden. Selbst wenn Stahl weiterhin als Material für den Doppelkolben 8 verwendet wird, so ist durch die hohle Ausgestaltung der Kolbenstange 20 dennoch eine signifikante Gewichteinsparung möglich. Gleichzeitig eröffnet sich auch die Möglichkeit, andere Materialien, wie beispielsweise ein leichtes aber weiches Metall oder sogar Kunststoff, zu verwenden.

Weiterhin kann man Fig. 2 entnehmen, dass zwischen dem Außengehäuse 2 und dem ersten Gehäuseabschnitt 10 ein Ringraum 18 verbleibt, der ebenfalls mit dem Arbeitsraum 16 zusammenwirkt. Über diesen erfindungsgemäßen Ringraum 18 wird das Gehäuseteil 10 zumindest im Bereich des Arbeitsraums 16 von allen Seiten mit Druck beaufschlagt, so dass die Stabilität des ersten Gehäuseteils 10 verstärkt wird.

Diese erfindungsgemäßen Ausgestaltungen ermöglichen es, den Doppelkolben 8 und/oder das ersten und/oder das zweite Gehäuseteil 10; 12 aus einem weniger druckstabilen Material als Stahl zu fertigen. Insbesondere ist eine Herstellung aus einem Kunststoff möglich.

Dabei ist insbesondere bevorzugt, das Außengehäuse 2 aus einem glasfaserverstärkten Kunststoff auszubilden, während das erste und/oder zweite Gehäuseteil 10; 12 aus einem unverstärkten Kunststoff, wie beispielsweise aus Polyamid, Polyoxymethylen, Polypropylen oder ähnlichen Kunststoffen hergestellt werden können. Diese Kunststoffe haben den Vorteil, dass die daraus gefertigten Wände sehr glatt und damit optimal für die Dichtung 14 des Arbeitskolbens und eine Dichtung 44 am Förderkolben 8b ausgestaltet werden können, während das glasfaserverstärkte Außengehäuse 2 zwar keine glatten Wände aufweist, aber dafür besonders großen Drücken statthalten kann. Die mangelnde Stabilität des unverstärkten Kunststoffs des ersten Gehäuseteils 10 kann dabei über den erfindungsgemäßen Ringraum 18 kompensiert werden. Das zweite Gehäuseteil 12 kann dagegen mit einer Stabilisierungshülse 32 umgeben sein. Diese Stabilisierungshülse 32 kann beispielsweise aus einem dünnen Metall oder einem Blech gefertigt sein, es ist jedoch auch möglich, wie für das Außengehäuse 2, einen glasfaserverstärkten Kunststoff zu verwenden. Dabei sind üblicherweise erstes und zweites Gehäuseteil aus demselben Material gefertigt, da das Innengehäuse als zusammenhängendes Bauteil ausgebildet ist. Dennoch ist vorstellbar, erstes und zweites Gehäuseteil als separate Bauteile auszubilden.

Weiterhin zeigt Fig. 2, dass auf der dem Arbeitsraum 16 abgewandten Seite des Arbeitskolbens 8a ein Luftraum bzw. Federraum 24 verbleibt, in dem eine Rückstellfeder 26 angeordnet ist. Dabei ist der Federraum 24 gegenüber der Umgebung entlüftet, so dass im Federraum 24 und in der Umgebung im Wesentlichen der gleiche Druck herrscht. Dadurch kann beim Zustellen des Kolbens 8 im Federraum 24 kein Gegendruck aufgebaut werden, der dem Druck des Arbeitsmediums im Arbeitsraum 16 entgegenwirkt. Auf die Anordnung der Entlüftung wird weiter unten mit Bezug auf Fig. 3 eingegangen. Die Rückstellfeder 26 ermöglicht, dass der Kolben 8 von seinem unteren Totpunkt wieder zu seinem oberen Totpunkt rückgestellt werden kann.

Um Arbeitsmedium in den Ringraum 18 und weiter in den Arbeitsraum 16 einzuleiten, weist die Kolbenpumpenvorrichtung 1 weiterhin einen Arbeitsmediumzugang 28 auf. Dabei ist der Arbeitsmediumzugang 28 in dem Innengehäuse 3 ausgebildet und mündet in den zwischen dem Außengehäuse 2 und dem ersten Gehäuseteil 10 ausgebildeten Ringraum 18.

Wie Fig. 2 weiter zeigt, befindet sich der Förderkolben 8b an seinem oberen Totpunkt und bildet zwischen Förderkolben 8b und zweitem Gehäuseteil 12 einen Förderraum 34 aus, in den ein Fördermedium, insbesondere ein Schmiermittel, aus dem Vorratsbehälter 108 einbringbar ist. Dazu wird das Fördermedium über den Fördermediumeinlassstutzen 6 und die Ventilanordnung 4 zu einem Fördermediumeinlass 36 und von dort in den Förderraum 34 eingebracht. Die Ventilanordnung 4 weist dazu vorzugsweise ein Rückschlagventil 38 auf, das insbesondere in der Schnittansicht der Fig. 3 dargestellt ist.

Weiterhin zeigt die Schnittansicht von Fig. 3 eine mögliche Anordnung für die Entlüftung 40 des Federraums 24, die im dargestellten Beispiel in unmittelbarer Nähe des Arbeitsmediumzugangs 28 ausgebildet ist. Zudem ist in Fig. 3 ein Fördermediumauslass 42 dargestellt, auf den weiter unten noch genauer eingegangen wird.

Rückkehrend zu Fig. 2, zeigt die Figur weiterhin, dass der Förderkolben 8b über Dichtungen 44 dicht an dem zweiten Gehäuseteil 12 anliegt. Dadurch entsteht beim Verfahren des Kolbens 8 von einem unteren Totpunkt zu dem in Fig. 2 dargestellten oberen Totpunkt ein Unterdruck in dem Förderraum 34, der wiederum mit dem in dem Fördermediumeinlassstutzen 6 angeordneten Rückschlagventil 38 zusammenwirkt, so dass sich das Rückschlagventil 38 öffnet und den Fördermediumeinlass 36 mit dem Fördermediumeinlassstutzen 6 und damit mit dem Vorratsbehälter 108 fluidisch verbindet, so dass ein Eintritt des Fördermediums aus dem Vorratsbehälter 108 in den Förderraum 34 möglich ist.

Wird der Kolben 8 dagegen von seinem oberen Totpunkt in Richtung seines unteren Totpunkts bewegt, so schließt sich das Rückschlagventil 38, so dass kein Fördermedium in den Vorratsbehälter 108 zurückfließen kann. Für einen Auslass des Fördermediums aus dem Förderraum 34 ist an dem Fördermediumauslass 42 eine weitere Ventilanordnung 46 vorgesehen, die sich vorzugsweise abhängig von einem im Förderraum 34 herrschenden Druck des Fördermediums öffnet, den Fördermediumauslass 42 freigibt und ermöglicht, dass Fördermedium aus dem Förderraum 34 austreten kann. Weiterhin kann an der Ventilanordnung 46 ein Druckschalter 48 angeordnet sein, der einen im Förderraum 34 herrschenden Druck überwacht.

Der Einlass und der Auslass des Schmiermittels in die Kolbenpumpenvorrichtung 1 bzw. aus der Kolbenpumpenvorrichtung 1 wird insbesondere unter Bezugnahme auf die Fig. 4 und 5 deutlich. Fig. 4 zeigt dabei eine Schnittansicht der Kolbenpumpenvorrichtung 1 aus Fig. 1 entlang der Linie C-C, während Fig. 5 eine Aufsicht auf den Pumpengehäusebodenabschnitt 104 ohne Kolbenpumpenvorrichtung 1 zeigt.

Wie Fig. 4 zu entnehmen, ist der Fördermediumeinlassstutzen 6 fluidisch mit dem Fördermediumeinlass 36 verbunden. Nicht dargestellt ist in dieser Ansicht das Rückschlagventil 38, das nur bei einem im Förderraum 34 herrschenden Unterdruck sich öffnet. Neben dem Fördermediumeinlass 36 ist der Fördermediumauslass 42 dargestellt, der den Förderraum 34 mit der Ventilanordnung 46 verbindet. Dabei wird die Ventilanordnung 46 derart geregelt, so dass erst ab einem bestimmten im Förderraum 34 herrschenden Druck Fördermedium aus dem Fördermediumauslass 42 treten kann. Dabei wird der Druck mit Hilfe des Druckschalters 48 überwacht. Ist der vorbestimmte Druck erreicht, öffnet sich die Ventilanordnung 46, so dass Schmiermittel in einen Fördermediumkanal 50 eintreten kann, der Teil des Pumpengehäusebodenabschnitts 104 ist. Der Fördermediumkanal 50 wiederum mündet in einen gehäuseseitigen Fördermediumauslass 52, der beispielsweise mit Zulaufleitungen zu einem Verbraucher verbindbar ist.

Weiterhin zeigt Fig. 4, dass konstruktionsbedingt der Fördermediumkanal 50 eine zweite mit einem Stopfen 54 verschlossene Öffnung aufweist. Dieser Stopfen 54 wird über ein Befestigungsmittel 56 in seiner Lage gesichert. Gleichzeitig dient das Befestigungsmittel 56 dazu, die Kolbenpumpenvorrichtung 1 in dem Pumpengehäusebodenabschnitt 104 zu befestigen.

Ein weiterer Aspekt der erfindungsgemäßen Kolbenpumpenvorrichtung 1 ist in Fig. 5 dargestellt. Dabei zeigt Fig. 5 eine Aufsicht auf den Pumpengehäusebodenabschnitt 104 ohne die Kolbenpumpenvorrichtung 1. Dabei ist wiederum der Druckschalter 48 zu sehen. Weiterhin kann der Fig. 5 entnommen werden, dass der Fördermediumkanal 50 sich nicht nur zu einem einzigen gehäuseseitigen Fördermediumauslass 52 hin verzweigt, sondern das Fördermedium über ein Kanalsystem 60 an zwei weitere Auslässe 62, 64 seitlich bzw. rückseitig des Pumpengehäusebodenabschnitts 104 verteilt werden kann. Weiterhin kann der Aufsicht aus Fig. 5 entnommen werden, dass das Befestigungsmittel 56 nicht nur dazu geeignet ist, die Kolbenpumpenvorrichtung 1 in dem Pumpengehäusebodenabschnitt 104 zu sichern, sondern gleichzeitig ein Halteelement 66 befestigt, das wiederum dazu ausgelegt ist, einen Füllstandsensor 68 in einer senkrechten Position zu sichern. Dazu weist das Halteelement 66 eine erste vertikale Kante 70 und eine zur ersten vertikalen Kante 70 im Wesentlichen senkrecht angeordnete zweite vertikale Kante 72 auf, die als Abstützelemente für den Füllstandsensor 68 dienen.

Das Haltelement 66 sowie ihre Befestigung und die Befestigung des Füllstandsensors 68 sind detailliert in Figur 7 dargestellten Ansichten dargestellt. Dabei zeigt die Teilansicht von Fig. 7a eine Aufsicht auf das erfindungsgemäße Halteelement 66 mit den Anlagekanten 70, 72 und der Öffnung 76. Wie der Fig. 7a zu entnehmen, sind die Anlageflächen 70, 72 im Wesentlichen senkrecht zueinander ausgerichtet und bilden aufgrund ihrer vertikalen Ausdehnung auch eine vertikale Abstützfläche für den hier nicht dargestellten Schmiermittelsensor. Fig. 7b zeigt dagegen eine seitliche Darstellung des Halteelements 66, wobei zum einen sichtbar ist, dass die Anlageflächen eine ausreichende vertikale Ausdehnung d aufweisen, um eine vertikale Abstützung über die Anlageflächen 70, 72 zu ermöglichen. Weiterhin zeigt Fig. 7b, dass aufgrund des im Wesentlichen im 90° Winkel ausgerichteten ersten Schenkels 80 und zweiten Schenkels 82, das Halteelement auch über seine eigene vertikale Ausrichtung eine automatische Ausrichtung des Füllstandsensors ermöglicht. Gleichzeitig kann, wie bereits unter Bezugnahme auf die Fig. 5 erwähnt, das Befestigungselement 56 dazu verwendet werden, eine Abdeckkappe bzw. Stopfen 52 in der Öffnung 54 zu sichern. Zudem ist dieser Figur zu entnehmen, dass mittels des erfindungsgemäßen Halteelements 66 sowohl der Füllstandsensor 68 im Wesentlichen vertikal ausgerichtet, und zum anderen die Kolbenpumpenvorrichtung 1 selbst bzw. die Ventilanordnung 4 an dem Pumpengehäusebodenabschnitt 104 befestigt werden können.

Insgesamt ermöglicht die erfindungsgemäße Ausgestaltung der Schmiermittelpumpe, dass zum einen eine kompakte und im vertikalen Bereich niedrig bauende Schmiermittelpumpe bereitgestellt ist, die gleichzeitig für eine verschmutzungsfreie Schmiermitteleinfüllung sorgt. Gleichzeitig kann die erfindungsgemäße Schmiermittelpumpe einfacher montiert werden, da die Anzahl der zu montierenden Elemente verringert ist. Insbesondere betrifft dies den zu montierenden Füllstandsensor, der üblicherweise mittels mehrerer Elemente kompliziert und zeitaufwendig in seiner vertikalen Position justiert werden muss. Mittels des erfindungsgemäßen Halteelements dagegen kann der Füllstandsensor einfach justiert und montiert werden. Gleichzeitig dient das erfindungsgemäße Halteelement dazu, die Kolbenpumpeneinheit in dem Gehäuse zu befestigen und Elemente, wie beispielsweise eine Abdeckkappe an der Ventilanordnung in ihrer Lage zu sichern.

### Bezugszeichenliste

- 1: Kolbenpumpenvorrichtung
- 2: Außengehäuse
- 3: Innengehäuse
- 4: Ventilanordnung
- 6: Fördermediumeinlassstutzen
- 8: Doppelkolben
- 8a: Arbeitskolben
- 8b: Förderkolben
- 10: erster Gehäuseabschnitt
- 12: zweiter Gehäuseabschnitt
- 14: Dichtung
- 16: Arbeitsraum
- 18: Ringraum
- 20: Kolbenstange
- 22: Umstülpung des Kolbens
- 24: Luftraum/Federraum
- 26: Rückstellfeder
- 28: Arbeitsmediumzugang
- 30: Dichtung
- 32: Stabilisierungshülse
- 34: Förderraum
- 36: Fördermediumeinlass
- 38: Rückstellventil
- 40: Entlüftung
- 42: Fördermediumauslass
- 44: Dichtungen
- 46: Ventilanordnung
- 48: Druckschalter
- 50: Fördermediumkanal
- 52: gehäuseseitiger Fördermediumauslass
- 54: Stopfen
- 56: Befestigungsmittel
- 60: Schmiermittelverteilkanal
- 62, 64: gehäuseseitige Schmiermittelauslässe
- 66: Halteelement
- 68: Füllstandssensor
- 70, 72: Anschlagsfläche
- 76: Öffnung
- 80: erster Schenkel
- 82: zweiter Schenkel

- 100: Schmiermittelpumpe
- 102: Gehäuse
- 104: Pumpengehäusebodenabschnitt
- 106: Pumpengehäuseabdeckabschnitt
- 108: Vorratsbehälter
- 110: Vorratsbehälterabdeckung
- 112: Schmiermitteleinlassöffnung
- 114: Deckel
- 116: Scharnier
- 118: Frontelement
- 120: Abdeckelement
- 122: Verschwenkbereich

## Patentansprüche

1. Schmiermittelpumpe (100) mit einem Gehäuse (102), das einen Vorratsbehälter (108) mit einem Vorratsbehälterdeckel (110) für Schmiermittel und einen eine Pumpeneinheit, insbesondere eine Kolbenpumpenvorrichtung (1), umfassenden Pumpengehäuseabschnitt (104, 106) aufweist, wobei die Pumpeneinheit dazu ausgelegt ist ein Schmiermittel aus dem Vorratsbehälter (108) an einen am Gehäuse (102) angeordneten Schmiermittelauslass (52; 62; 64) zu fördern, und wobei der Vorratsbehälter (108) eine Schmiermitteleinfüllöffnung (112) und eine mit der Pumpeneinheit verbundene Schmiermittelauslassstelle aufweist, wobei die Schmiermitteleinfüllöffnung (112) an einer Oberseite des Vorratsbehälters (108) an dem Vorratsbehälterdeckel (110) angeordnet ist und mit einem Deckel (114) abgedeckt ist, **dadurch gekennzeichnet, dass** der Deckel (114) zum Abdecken der Schmiermitteleinfüllöffnung (112) an einer Vorderseite des Vorratsbehälters (108) drehbar gelagert angeordnet ist und ein Frontelement (118) und ein daran abgewinkelt angeordnetes Abdeckelement (120) aufweist, wobei das Abdeckelement (120) dazu ausgebildet ist, in einer geschlossenen Position die Schmiermitteleinfüllöffnung (112) in dem Vorratsbehälterdeckel (110) abzudecken, und in einer geöffneten Position von der Vorderseite des Vorratsbehälters abzustehen und eine Tropfauffangschale auszubilden .

2. Schmiermittelpumpe (100) nach Anspruch 1, wobei der Deckel (114) über ein Scharnier (116) drehbar befestigt ist, das einen Verdrehwinkel von ungefähr 180° ermöglicht.

3. Schmiermittelpumpe (100) nach einem der vorhergehenden Ansprüche, wobei der Pumpengehäuseabschnitt (104, 106) unterhalb des Vorratsbehälters (108) angeordnet ist, wobei vorzugsweise die Pumpeneinheit als Kolbenpumpenvorrichtung (1) ausgebildet ist deren Kolbenpumpenbewegung im Wesentlichen horizontal erfolgt.

4. Schmiermittelpumpe (100) nach einem der vorhergehenden Ansprüche, wobei die Pumpeneinheit weiterhin eine Ventilanordnung (4) aufweist.

5. Schmiermittelpumpe (100) nach einem der vorhergehenden Ansprüche, wobei weiterhin ein Schmiermittelfüllstandsensor (68) vorgesehen ist, der an der Pumpeneinheit mittels eines Halteelements (66) befestigt ist und von dort aus in den Vorratsbehälter (108) hineinragt.

6. Schmiermittelpumpe (100) nach Anspruch 5, wobei das Halteelement (66) eine erste im Wesentlichen vertikal ausgerichtete Anlagefläche (70) und eine zweite im Wesentlichen vertikal ausgerichtete Anlagefläche (72) für den Schmiermittelfüllstandsensor (68) aufweist, wobei die erste und die zweite Anlagefläche (70; 72) horizontal im Wesentlichen im rechten Winkel zueinander angeordnet sind.

7. Schmiermittelpumpe (100) nach Anspruch 5 oder 6, wobei das Halteelement (66) weiterhin dazu ausgelegt ist, die Pumpeneinheit (1) und/oder die Ventilanordnung (4) in dem Pumpengehäuseabschnitt (104, 106) zu halten.

8. Schmiermittelpumpe (100) nach einem der Ansprüche 5 bis 7, wobei das Halteelement (66) weiterhin eine Öffnung (76) zum Aufnehmen eines Befestigungsmittels (56) aufweist, wobei das Befestigungsmittel (56) dazu ausgelegt ist, das Halteelement (66) und gleichzeitig die Pumpeneinheit (1) und/oder Ventileinheit (4) in dem Pumpengehäuseabschnitt (104, 106) zu befestigen, wobei die Öffnung (76) vorzugsweise ein Innengewinde zur Aufnahme eines als Schraube ausgebildeten Befestigungsmittels (56) aufweist.

## Claims

1. Lubricant pump (100) having a housing (102) which has a storage vessel (108) with a storage vessel cover (110) for lubricant and has a pump housing portion (104, 106) which comprises a pump unit, in particular a piston pump device (1), wherein the pump unit is designed to convey a lubricant from the storage vessel (108) to a lubricant outlet (52; 62; 64) arranged on the housing (102), and wherein the storage vessel (108) has a lubricant filling opening (112) and has a lubricant outlet point connected to the pump unit, wherein the lubricant filling opening (112) is arranged at a top side of the storage vessel (108) on the storage vessel cover (110) and is covered by means of a cover (114), **characterized in that** the cover (114) for covering the lubricant filling opening (112) is arranged so as to be rotatably mounted on a front side of the storage vessel (108) and has a front element (118) and a covering element (120) arranged at an angle on said front element, wherein the covering element (120) is designed to, in a closed position, cover the lubricant filling opening (112) in the storage vessel cover (110) and, in an opened position, project from the front side of the storage vessel and form a droplet collecting tray.

2. Lubricant pump (100) according to Claim 1, wherein the cover (114) is fastened rotatably by means of a hinge (116) which permits an angle of rotation of approximately 180°.

3. Lubricant pump (100) according to any of the preceding claims, wherein the pump housing portion (104, 106) is arranged below the storage vessel (108), wherein preferably, the pump unit is designed as a piston pump device (1), the piston pump movement of which takes place substantially horizontally.

4. Lubricant pump (100) according to any of the preceding claims, wherein the pump unit furthermore has a valve arrangement (4).

5. Lubricant pump (100) according to any of the preceding claims, wherein, furthermore, a lubricant fill level sensor (68) is provided, which is fastened to the pump unit by means of a holding element (66) and projects from there into the storage vessel (108).

6. Lubricant pump (100) according to Claim 5, wherein the holding element (66) has a first substantially vertically oriented abutment surface (70) and a second substantially vertically oriented abutment surface (72) for the lubricant fill level sensor (68), wherein the first and the second abutment surface (70; 72) are arranged horizontally and substantially at right angles to one another.

7. Lubricant pump (100) according to Claim 5 or 6, wherein the holding element (66) is furthermore designed to hold the pump unit (1) and/or the valve arrangement (4) in the pump housing portion (104, 106) .

8. Lubricant pump (100) according to any of Claims 5 to 7, wherein the holding element (66) furthermore has an opening (76) for receiving a fastening means (56), wherein the fastening means (56) is designed to fasten the holding element (66) and at the same time the pump unit (1) and/or valve unit (4) in the pump housing portion (104, 106), wherein the opening (76) preferably has an internal thread for receiving a fastening means (56) in the form of a screw.

## Revendications

1. Pompe à lubrifiant (100) comprenant un carter (102) qui comprend un réservoir (108), doté d'un couvercle de réservoir (110), pour du lubrifiant et une partie de carter de pompe (104, 106) comportant une unité de pompage, en particulier un dispositif pompe à pistons (1), l'unité de pompage étant conçue pour refouler un lubrifiant à partir du réservoir (108) au niveau d'une sortie de lubrifiant (52 ; 62 ; 64) disposée sur le carter (102), et le réservoir (108) comprenant une ouverture de remplissage de lubrifiant (112) et un point de sortie de lubrifiant relié à l'unité de pompage, l'ouverture de remplissage de lubrifiant (112) étant disposée sur un côté supérieur du réservoir (108) sur le couvercle de réservoir (110) et étant recouverte par un couvercle (114), **caractérisée en ce que** le couvercle (114) servant à recouvrir l'ouverture de remplissage de lubrifiant (112) est disposé de manière montée à rotation sur un côté avant du réservoir (108) et comprend un élément frontal (118) et un élément de recouvrement (120) disposé de manière coudée sur celui-ci, l'élément de recouvrement (120) étant conçu pour, dans une position fermée, recouvrir l'ouverture de remplissage de lubrifiant (112) dans le couvercle de réservoir (110) et, dans une position ouverte, faire saillie à partir côté avant du réservoir et former un bac collecteur de gouttes.

2. Pompe à lubrifiant (100) selon la revendication 1, dans laquelle le couvercle (114) est fixé de manière rotative par le biais d'une charnière (116) qui rend possible un angle de rotation d'approximativement 180°.

3. Pompe à lubrifiant (100) selon l'une quelconque des revendications précédentes, dans laquelle la partie de carter de pompe (104, 106) est disposée en dessous du réservoir (108), dans laquelle l'unité de pompage est de préférence réalisée sous forme de dispositif pompe à pistons (1) dont le mouvement de pompe à pistons s'effectue sensiblement horizontalement.

4. Pompe à lubrifiant (100) selon l'une quelconque des revendications précédentes, dans laquelle l'unité de pompage comprend en outre un ensemble soupape (4) .

5. Pompe à lubrifiant (100) selon l'une quelconque des revendications précédentes, dans laquelle un capteur de niveau de remplissage de lubrifiant (68) est en outre prévu, lequel capteur est fixé à l'unité de pompage au moyen d'un élément de retenue (66) et pénètre dans le réservoir (108) à partir de là.

6. Pompe à lubrifiant (100) selon la revendication 5, dans laquelle l'élément de retenue (66) comprend une première surface d'appui (70) orientée sensiblement verticalement et une deuxième surface d'appui (72) orientée sensiblement verticalement pour le capteur de niveau de remplissage de lubrifiant (68), dans laquelle la première et la deuxième surface d'appui (70 ; 72) sont disposées horizontalement sensiblement à angle droit l'une par rapport à l'autre.

7. Pompe à lubrifiant (100) selon la revendication 5 ou 6, dans laquelle l'élément de retenue (66) est en outre conçu pour retenir l'unité de pompage (1) et/ou l'ensemble soupape (4) dans la partie de carter de pompe (104, 106).

8. Pompe à lubrifiant (100) selon l'une quelconque des revendications 5 à 7, dans laquelle l'élément de retenue (66) comprend en outre une ouverture (76) servant à recevoir un moyen de fixation (56), dans laquelle le moyen de fixation (56) est conçu pour fixer l'élément de retenue (66) et en même temps l'unité de pompage (1) et/ou l'unité soupape (4) dans la partie de carter de soupape (104, 106), dans laquelle l'ouverture (76) comprend de préférence un filetage intérieur destiné à recevoir un moyen de fixation (56) réalisé sous forme de vis.
